# EUROPÄISCHE PATENTSCHRIFT

(11) **EP 0 648 807 B1**
(45) Veröffentlichungstag und Bekanntmachung des Hinweises auf die Patenterteilung: **13.05.1998**
(21) Anmeldenummer: 94112177.4
(22) Anmeldetag: 04.08.1994
(51) Int. Cl.: C08K 11/00, C08K 13/08, C08L 97/02, B27N 3/00, C09J 193/00, C09J 197/02

(54) **Bindemittel auf der Basis von Gerbstoffen.**
Binding agent based on tannin
Liant à base de tannin

(30) Priorität: 13.10.1993 DE 4334962; 02.03.1994 DE 4406825
(43) Veröffentlichungstag der Anmeldung: 19.04.1995
(73) Patentinhaber: Bakelite AG, 58642 Iserlohn-Letmathe (DE)
(72) Erfinder: Pizzi, Antonio, Prof., F-88000 Epinal (FR); Roll, Willi, D-48337 Altenberge (DE); Dombo, Berthold, Dr., D-41061 Mönchengladbach (DE)

(56) Entgegenhaltungen:
- EP-A- 0 536 795
- JOURNAL OF MACROMOLECULAR SCIENCE-CHEMISTRY, Band A16, Nr. 5, 1981 A.PIZZI,"A Universal Formula- tion for Tannin Adhesives for Exterior Particle Board" Seiten 1243-1250

## Beschreibung

Die Erfindung betrifft neue Bindemittel, die bei höheren Temperaturen aushärtbar und mit cellulosehaltigen Materialien, wie z. B. Holz verträglich sind und sich zur Herstellung von Holzwerkstoffen wie Spanplatten eignen.

Im Zuge der Suche nach natürlichen und insbesondere nachwachsenden Rohstoffen für die Herstellung von Bindemitteln für Holzwerkstoffe ist auch die Verwendung von Tanninen bekannt (J. Macromol. SCI.-Chem. A 16 (7), 1243-1250 (1981).

Trotz guter Verfügbarkeit hat sich ihre Verwendung bisher nicht durchgesetzt, da die Zugfestigkeit, insbesondere nach Feuchtigkeitseinwirkung, von gerbstoffgebundenen Holzwerkstoffen nicht zufriedenstellend ist.

Nun wurde zwar von der Anmelderin in der Vergangenheit ein Gerbstoffe enthaltendes hitzehärtbares Bindemittel entwickelt (EP-A-0639608), das durch Zusatz eines in der Wärme Formaldehyd abspaltenden Mittel aushärtet und zu Holzwerkstoffen mit guten Festigkeiten und niedrigen Quellwerten bei Wasserlagerung führt, jedoch werden diese guten Werte einzig und allein mit dem Gerbstoff der Pekan-Nuß erzielt. Außerdem ist, falls die Dosierung des Formaldehyd abspaltenden Mittels unkorrekt durchgeführt wird, eine Formaldehydabspaltung, bzw. -freisetzung nach dem Verpressen nicht ganz auszuschließen.

Es ist daher Aufgabe der Erfindung, Mittel zur Verfügung zu stellen, durch die die Rohstoffbasis für Bindemittel verbreitert wird, die zu Holzwerkstoffen mit verbesserten mechanischen Eigenschaften führen und gleichzeitig eine verminderte, bzw. keine Formaldehydabspaltung aufweisen.

Die Lösung der Aufgabe besteht in einem Bindemittel aus einem Gerbstoff vom Polyflavonoid Typ und einer anorganischen Säure oder in wäßrigem Milieu sauer reagierenden Substanz mit einem pka-Wert größer als 7,5 als Härtungs-Katalysator, gemäß den Ansprüchen 1 bis 8, der Verwendung des Bindemittels zur Herstellung von Holzwerkstoffen oder Werkstoffen auf Basis cellulosehaltiger Produkte gemäß Anspruch 9 und in einem Verfahren zur Herstellung dieser Werkstoffe gemäß Anspruch 10.

Beispiele für derartige schwach sauer reagierende Verbindungen sind Borsäure, Aluminiumtrichlorid, Zinkdichlorid, Zinntetrachlorid oder Siliciumdioxid.

So gelieren z.B. Extrakte von Tannin der Pekan-Nuß (pH 9,55) nach Zugabe von jeweils 6 Gew.-% bei Raumtemperatur
AlCl₃ (pka = 8,6) innerhalb 780 s
H₃BO₃ (pka = 9,2) innerhalb 360 s
SiO₂ (pka = 10) innerhalb 49 s

Der bevorzugte Härtungskatalysator in den erfindungsgemäßen Bindemitteln ist Siliciumdioxid, das in hochdisperser oder kristalliner Form in einer Menge von bis zu 10 Gew.-%, bevorzugt in einer Menge von 1 bis 6 Gew.-% enthalten sein kann.

Beispiele für Gerbstoffe vom Polyflavonoid-Typ sind Gerbstoffe der Pekan-Nuß, der Pinus radiata (Kiefer), der Acacia mearnsii (Mimose) oder Schinopsis balansae (Quebracho) allein oder im Gemisch miteinander.

Diese Bindemittel können zur Herstellung von Holzwerkstoffen oder Werkstoffen auf Basis cellulosehaltiger Produkte verwendet werden, indem sie mit cellulosehaltigem Produkt vermischt oder auf cellulosehaltige Produkte, insbesondere Holzspäne aufgesprüht, das Gemisch oder die benetzten cellulosehaltigen Produkte in eine Form gebracht und dort bei einer Temperatur im Bereich von 150 bis 210 °C bei einem Druck im Bereich von 0,1 bis 4 MPa/mm² behandelt werden.

Mit Hilfe solcher formaldehydfreier Bindemittel können Werkstoffe hergestellt werden, deren Zugfestigkeit beispielsweise der von Phenolharz gebundenen Werkstoffen entspricht, deren Feuchtigkeitsbeständigkeit jedoch höher ist, so daß sie besonders geeignet sind für Verwendungen im Außenbereich.

Von besonderem Vorteil ist, daß die Gerbstoffe auch ohne Aufschlußbehandlung, wie sie häufig in der Literatur beschrieben ist, eingesetzt werden können.

Beispielsweise kann das Gerbstoff der Pekan-Nuß (Carya Illinoensis) als handelsübliches Produkt, wie es bislang vorwiegend als Gerbmittel eingesetzt wird, verwendet werden.

Es wurde gefunden, daß zur Herstellung erfindungsgemäßer Bindemittel der pH-Wert unterschiedlich eingestellt werden kann. Eine Härtung wird sowohl im sauren Bereich (pH < 2) als auch im alkalischen Bereich (pH > 7,5) erzielt. Die Einstellung des pH-Werts beeinflußt wiederum, wieviel der schwach sauer reagierenden Verbindung, insbesondere an SiO₂ als Härtungskatalysator im Bindemittel eingesetzt werden muß, um eine optimale Aushärtung zu erzielen.

Werden beispielsweise zu einer Pekan-Nuß-Gerbstofflösung mit einem pH-Wert von 8,2 6 Gew.-% SiO₂ hinzugefügt, weisen mit dieser Mischung hergestellte Spanplatten nach einer verhältnismäßig langen Preßzeit von 7,5 Minuten ein Maximum der Zugfestigkeit von 0,55 MPa auf. Wird dagegen bei einem pH-Wert von 10,2 die gleiche Menge SiO₂ hinzugefügt, ist keine Spanplattenherstellung mehr möglich, da solche Bindemittel bereits bei niedrigen Temperaturen zu schnell aushärten. Dieses bedeutet, daß zu reaktiven Gerbstoffen umso weniger SiO₂ als Härtungskatalysator hinzugefügt werden muß, je höher der pH-Wert eingestellt ist. Dieses ist so ausgeprägt, daß eine V 20-Spanplatte (DIN), die mit einem Pekan-Nuß-Gerbstoff bei einem pH-Wert von 10,2 jedoch mit nur 0,1 bis 0,2 Gew.-% SiO₂-Zusatz hergestellt wird, nach einer Preßzeit von 7,5 Minuten eine Zugfestigkeit von 0,71 MPa aufweist. Auch wenn in diesem Fall die Preßzeit auf 2 Minuten reduziert (10 sec/mm) wird, weisen die Spanplatten noch eine Zugfestigkeit von 0,41 MPa auf, also immer noch für V 20-Platten befriedigende Werte.

Anders sieht dieses aus, wenn weniger reaktive Gerbstoffe verwendet werden. Beispielsweise erreichen Spanplatten, in denen Gerbstoff aus Mimosen Rinde (Acacia mearnsii) als alleiniges Bindemittel benutzt wird, nur etwa 39 % der Festigkeit einer Pekan-Nuß-Gerbstoff-Platte. Jedoch durch die Zugabe von etwa 3 Gew.-% SiO₂ wird eine Festigkeit erzielt, die den Anforderungen genügt, die an V 20-Platten gestellt werden.

Gerbstoffe aus Kiefernrinde (Pinus radiata) sind an sich recht reaktionsträge, wenn sie jedoch mit Pekan-Nuß-Gerbstoff vermischt werden, weisen auch sie in Gegenwart des erfindungsgemäßen SiO₂-Härtungskatalysators eine ausreichende Reaktivität für die Verwendung als Bindemittel für cellulosehaltige Produkte auf. Bereits die Zugabe von 10 Gew.-% Pekan-Nuß-Gerbstoff ist für eine industrielle Anwendung ausreichend.

Insbesondere sind jedoch solche Mischungen geeignet, in denen das Gewichtsverhältnis von Pekan-Nuß-Gerbstoff zu Kiefern-Gerbstoff 30 : 70 bis 50 : 50 beträgt. Mit solchen Mischungen können Preßzeiten von 10 sec/mm erzielt werden.

Bei einem Mischungsverhältnis von 30 : 70 bis 35 : 75 Gew.-Teilen Pekan-Nuß-Gerbstoff zu Kiefern-Gerbstoff werden auch befriedigende Ergebnisse in der Herstellung von V 100-Platten erzielt. Kürzere Preßzeiten können jedoch bei Mischungsverhältnissen zwischen 35 : 75 bis 40 : 60 erzielt werden. Ähnliche Ergebnisse wurden mit dem recht reaktionsträgen Gerbstoff des Quebracho erzielt.

Insgesamt zeigten die Versuche mit erfindungsgemäßen Bindemitteln, daß im Vergleich zu Harnstoff-Formaldehyd-Bindemitteln mit wesentlich geringeren Bindemittelkonzentrationen gearbeitet werden kann, und daß sich durch die Verwendung höherer Bindemittelkonzentrationen die Preßzeiten wesentlich verringern.

Zur Herstellung cellulosehaltiger, gebundener Produkte werden die Gerbstoffe, bzw. das Gerbstoffgemisch auf den gewünschten pH-Wert gebracht, mit der schwach sauer reagierenden Verbindung, insbesondere mit dem SiO₂, das sowohl in kristalliner oder hochdisperser Form eingesetzt werden kann, und den cellulosehaltigen Produkten vermischt, bevor diese zu den entsprechenden Werkstoffen verpreßt werden.

Überlicherweise werden für Bindemittel auf der Basis weniger reaktiver Gerbstoffe und zur Erzielung kurzer Preßzeiten bis zu 10 Gew.-%, insbesondere 1 bis 6 Gew.-% der schwach sauer reagierenden Verbindung eingesetzt. Höhere Zusätze an Härtungskatalysator als 10 Gew.-% haben sich als nicht sinnvoll ergeben, da dadurch keine Verbesserung mehr erzielt werden kann.

Entsprechende cellulosehaltige Produkte, sind z. B. Holzfurniere, Holzspäne, Fasern auf Cellulosebasis oder auch Stroh, aus denen Spanplatten, Sperrholz oder Schall- und Wärmedämmplatten hergestellt werden.

Die Herstellung der Werkstoffe erfolgt in der Art, daß die erfindungsgemäßen Bindemittel mit cellulosehaltigen Produkten vermischt, das Gemisch in eine Form gebracht und bei einer Temperatur unterhalb der Zersetzungstemperatur des Gerbstoffs, bevorzugt bei 150 bis 210 °C unter Druck gehärtet werden. Der Druck liegt dabei, je nach Einsatzmaterial und gewünschter Dichte im Bereich von 0,1 bis 4 MPa/mm².

So ist z. B. auch die Herstellung dreilagiger Spanplatten möglich, mit einem Druck von 2 bis 3,5 MPa/mm².

Die Menge des Bindemittels liegt je nach gewünschtem Werkstoff und gewünschter Festigkeit im Bereich von 4 bis 20 Gew.-%, bezogen auf das cellulosehaltige Produkt. Das Bindemittel kann als Lösung der Komponenten in Wasser, Alkohol oder im Wasser-Alkohol-Gemisch vorliegen.

Die folgenden Tabellen zeigen die erfindungsgemäßen Bindemittel bei ihrem Einsatz zur Herstellung von Spanplatten unter Verwendung von hochdispersem SiO₂ (Aerosil® 200) als Härtungsbeschleuniger.

Holzspäne werden mit wäßrig-alkoholischer Lösung, die 11 Gew.-% Bindemittel, bezogen auf das Gewicht der eingesetzten Holzspäne enthält, besprüht und getrocknet. Danach werden sie in an sich bekannter Weise (2,5 N/mm²; 195 °C) zu Platten der Dimension 400 x 350 x 12 mm geformt, gepreßt und gehärtet.

### TABELLEN

Einfluß der zugesetzten SiO₂-Menge auf Pekan-Nuß-Gerbstoff als Bindemittel für Spanplatten von 12 mm Dicke bei einem pH von 8,2 und einer Preßzeit von 7,5 Minuten

**Tabelle 1**

| **% SiO**_{**2**} | **Querzugfestigkeit (trocken) [MPa]** | **Dichte [g/cm**^{**3**}**]** | **Feuchte [%]** |
|---|---|---|---|
| 0 | 0,230 | 0,706 | 13 |
| 3 | 0,329 | 0,702 | 14 |
| 6 | 0,547 | 0,702 | 15 |
| 9 | 0,356 | 0,703 | 14 |
| 18 | 0,343 | 0,700 | 22 |

**Tabelle 2**

| | | | |
|---|---|---|---|
| Einfluß der zugesetzten SiO₂-Menge auf Mimosen-Gerbstoff als Bindemittel für Spanplatten von 12 mm Dicke bei einem pH von etwa 10 und einer Preßzeit von 7,5 Minuten. | | | |

| **% SiO**_{**2**} | **Querzugfestigkeit (trocken) [MPa]** | **Dichte [g/cm**^{**3**}**]** | **Feuchte [%]** |
|---|---|---|---|
| 0 | 0,160 | 0,699 | 20 |
| 3 | 0,475 | 0,698 | 18 |
| 6 | 0,449 | 0,699 | 20 |
| 9 | 0,385 | 0,701 | 21 |

**Tabelle 3**

| | | | | |
|---|---|---|---|---|
| Einfluß des Mischungsverhältnisses von Pekan-Nuß-Gerbstoff und Kiefern-Gerbstoff bei einem pH von 10,2 und einer Preßzeit von 7,5 Minuten auf die Eigenschaften von Spanplatten einer Dicke von 12 mm. | | | | |

| **Pekan-Nuß- Gerbstoff [%]** | **Kiefern- Gerbstoff [%]** | **Querzugfestigkeit (trocken) [MPa]** | **Dichte [g/cm**^{**3**}**]** | **Feuchte [%]** |
|---|---|---|---|---|
| 100 | 0 | 0,710 | 0,705 | 21 |
| 50 | 50 | 0,530 | 0,704 | 22 |
| 40 | 60 | 0,555 | 0,705 | 22 |
| 30 | 70 | 0,590 | 0,699 | 22 |
| 20 | 80 | 0,535 | 0,704 | 22 |
| 10 | 90 | 0,450 | 0,704 | 22 |
| 0 | 100 | 0,185 | 0,698 | 17 |

## Patentansprüche

1. Hitzehärtbares, formaldehydfreies Bindemittel auf Basis von Gerbstoff vom Polyflavonoid-Typ, **dadurch gekennzeichnet,** daß es als Härtungskatalysator eine anorganische Säure oder in wäßrigem Milieu sauer reagierende Substanz mit einem pka-Wert größer als 7,5 enthält.

2. Bindemittel gemäß Anspruch 1, **dadurch gekennzeichnet**, daß es als Härtungskatalysator SiO₂ enthält.

3. Bindemittel gemäß Anspruch 1, **dadurch gekennzeichnet**, daß es als Härtungskatalysator Borsäure enthält.

4. Bindemittel gemäß einem der Ansprüche 1 bis 3, **dadurch gekennzeichnet**, daß es den Härtungskatalysator in einer Menge von bis zu 10 Gew.-% enthält.

5. Bindemittel gemäß einem der Ansprüche 1 bis 3, **dadurch gekennzeichnet**, daß es den Härtungskatalysator in einer Menge von 1 bis 6 Gew.-% enthält.

6. Bindemittel gemäß Anspruch 2, **dadurch gekennzeichnet**, daß es einen pH-Wert von 0 bis 2 besitzt.

7. Bindemittel gemäß Anspruch 2, **dadurch gekennzeichnet**, daß es einen pH-Wert von 7,5 bis 14 besitzt.

8. Hitzehärtbare Bindemittel gemäß einem oder mehreren der Ansprüche 1 bis 7, **dadurch gekennzeichnet**, daß sie Gerbstoffe der Pekan-Nuß, der Pinus radiata, der Acacia mearnsii (Mimose) oder Schinopsis balansae (Quebracho) allein oder im Gemisch enthalten.

9. Verwendung hitzehärtbarer formaldehydfreier Bindemittel gemäß einem oder mehreren der Ansprüche 1 bis 8 zur Herstellung von Holzwerkstoffen oder Werkstoffen auf Basis cellulosehaltiger Produkte.

10. Verfahren zur Herstellung von Werkstoffen, wobei ein Bindemittel mit cellulosehaltigem Produkt vermischt, das Gemisch in eine Form gebracht und dort bei einer Temperatur im Bereich von 150 bis 210 °C und einem Druck im Bereich von 0,1 bis 4 MPa/mm² behandelt wird, **dadurch gekennzeichnet,** daß ein Bindemittel gemäß einem oder mehreren der Ansprüche 1 bis 8 verwendet wird.

## Claims

1. A heat curable, formaldehyde-free binder based on tannin of the polyflavanoid type, characterized in that it contains as curing catalyst an inorganic acid or a substance which is acid in aqueous medium with a pka value of more than 7.5.

2. A binder according to claim 1, characterized in that it contains SiO₂ as curing catalyst.

3. A binder according to claim 1, characterized in that it contains boric acid as curing catalyst.

4. A binder according to one of claims 1 to 3, characterized in that it contains the curing catalyst in a quantity of up to 10% by weight.

5. A binder according to one of claims 1 to 3, characterized in that it contains the curing catalyst in a quantity of from 1 to 6% by weight.

6. A binder according to claim 2, characterized in that it has a pH value of from 0 to 2.

7. A binder according to claim 2, characterized in that it has a pH value of from 7.5 to 14.

8. Heat-curable binders according to one or more of claims 1 to 7, characterized in that they contain tannins of pecan nut, *Pinus radiata, Acacia mearnsii* (mimosa) or *Schinopsis balansae* (quebracho) alone or in a mixture.

9. Use of heat curable, formaldehyde-free binders according to one or more of claims 1 to 8 for producing wood materials or materials based on cellulose-containing products.

10. A process for producing materials wherein a binder is mixed with a cellulose-containing product, the mixture is put in a mould and is treated there at a temperature in the range of 150 to 210°C and at a pressure in the range of from 0.1 to 4 MPa/mm², characterized in that a binder according to one or more of claims 1 to 8 is used.

## Revendications

1. Liant thermodurcissable, exempt de formaldéhyde à base de tanin du type polyflavonoïde, caractérisé en ce qu'il contient en tant que catalyseur de durcissement un acide inorganique ou une substance à réaction acide en milieu aqueux avec une valeur de pka supérieure à 7,5.

2. Liant selon la revendication 1, caractérisé en ce qu'il contient SiO² en tant que catalyseur de durcissement.

3. Liant selon la revendication 1, caractérisé en ce qu'il contient de l'acide borique en tant que catalyseur de durcissement.

4. Liant selon l'une des revendications 1 à 3, caractérisé en ce qu'il contient le catalyseur de durcissement en une quantité jusqu'à 10% en poids.

5. Liant selon l'une des revendications 1 à 3, caractérisé en ce qu'il contient le catalyseur de durcissement en une quantité de 1 à 6% en poids.

6. Liant selon la revendication 2, caractérisé en ce qu'il possède une valeur de pH de 0 à 2.

7. Liant selon la revendication 2, caractérisé en ce qu'il possède une valeur de pH de 7,5 à 14.

8. Liants thermodurcissables selon une ou plusieurs des revendications 1 à 7, caractérisés en ce qu'ils contiennent des tanins de noix de pécan, de Pinus radiata, d'Acacia Mearnsii (mimosa) ou de Schinopsis balanae (québraco), seuls ou en mélange.

9. Utilisation de liants thermodurcissables exempts de formaldéhyde selon une ou plusieurs des revendications 1 à 8 pour la fabrication de matériaux ligneux ou de matériaux à base de produits cellulosiques.

10. Procédé de fabrication de matériaux dans lequel un liant est mélangé avec un produit cellulosique, le mélange est introduit dans un moule et y est traité à une température dans la plage de 150 à 210°C et sous une pression dans la plage de 0,1 à 4 MPa/mm². caractérisé en ce qu'on utilise un liant selon une ou plusieurs des revendications 1 à 8.
